## Europäisches Patentamt

## European Patent Office

## Office européen des brevets

(11) Veröffentlichungsnummer: **0 000 698**
**B1**

(12) **EUROPÄISCHE PATENTSCHRIFT**

(45) Veröffentlichungstag der Patentschrift: **05.08.81**

(51) Int. Cl.³: **C 01 B 25/12**

(21) Anmeldenummer: **78100295.1**

(22) Anmeldetag: **03.07.78**

(54) Vorrichtung zur Herstellung von hexagonalem Phosphorpentoxid.

(30) Priorität: **16.08.77 DE 2736765**

(43) Veröffentlichungstag der Anmeldung:
**21.02.79 Patentblatt 79/4**

(45) Bekanntmachung des Hinweises auf die Patenterteilung:
**05.08.81 Patentblatt 81/31**

(84) Benannte Vertragsstaaten:
**CH DE FR GB NL**

(56) Entgegenhaltungen:
FR - A - 1 292 032
FR - A - 1 305 386
GB - A - 197 863
SU - A - 179 752
US - A - 2 132 360
US - A - 2 532 322

CHEMIE-INGENIEUR-TECHNIK, 47 Jahrg. 1975
Nr. 13: S.A 385

(73) Patentinhaber: **HOECHST AKTIENGESELLSCHAFT**
**Postfach 80 03 20**
**D-6230 Frankfurt/Main 80 (DE)**

(72) Erfinder: **Hartlapp, Gerhard, Dr.**
**Kriemhildestrasse 1**
**D-5030 Hürth-Hermülheim (DE)**
Erfinder: **Kowalski, Werner**
**Am Ginsterweg**
**D-5354 Weilerswist-Metternich (DE)**
Erfinder: **Queck, Robert**
**Bunsenweg 10**
**D-5030 Hürth-Burbach (DE)**
Erfinder: **Dahmen, Theo**
**von Westerburgstrasse 24**
**D-5040 Brühl (DE)**

## Vorrichtung zur Herstellung von hexagonalem Phosphorpentoxid

Die vorliegende Erfindung betrifft eine Vorrichtung zur Herstellung von hexagonalem Phosphorpentoxid, bestehend aus einer wassergekühlten Verbrennungskammer für Phosphor, der eine gekühlte Kondensationskammer für das hexagonale Phosphorpentoxid ($P_4O_{10}$) nachgeschaltet ist.

Phosphorpentoxid tritt in mehreren festen Modifikationen auf. Für technische Zwecke kommt fast ausschließlich die hexagonale Form zur Anwendung. Insbesondere die polymeren glasartigen Modifikationen sind reaktionsträge und darum durchweg unerwünscht.

Man gewinnt Phosphorpentoxid technisch durch Verbrennen von elementarem gelben Phosphor. Der entstehende Phosphorpentoxid-Dampf wird an gekühlten Flächen kondensiert.

Zur Durchführung dieses Verfahrens benutzte man bislang Vorrichtungen, die aus einer mit einer Phosphorverbrennungsdüse bestückten Brennkammer bestehen, die durch Berieseln mit Wasser von außen gekühlt wird. Diese Brennkammer ist mit einen Kondensationsraum verbunden, der einen Abgasstutzen sowie eine Austragsvorrichtung für $P_2O_3$ trägt (US—A 1 700 708). Diese Vorrichtung hat jedoch den Nachteil, daß damit eine gezielte Herstellung von hexagonalem $P_2O_5$ nicht möglich ist, da bereits in der Brennkammer ein Teil des entstandenen $P_2O_5$ kondensiert wird. Da diese Kondensation innerhalb eines sehr weiten Temperaturbereiches erfolgt, fallen dabei Produkte an, die aus einem Gemisch der verschiedenen Modifikationen des $P_2O_5$ bestehen.

Bekannt ist ferner aus der DE—B 1 300 527 zur gleichzeitigen Herstellung von hexagonalem Phosphorpentoxid und Polyphosphorsäure eine Vorrichtung einzusetzen, die aus einer gekühlten Brennkammer besteht, welche gleichzeitig die Kondensationskammer für das $P_2O_5$ darstellt, die über eine Abgasleitung mit einem Reaktionsturm im Verbindung steht, in welchem die Abgase der kombinierten Brenn-/Kondensationskammer von im Kreislauf geführter Phosphorsäure unter Bildung von Polyphorphorsäure absorbiert werden.

Nachteilig an dieser Vorrichtung ist u.a., daß sie nur dann verwendbar ist, wenn die $P_2O_5$—Herstellung mit der Gewinnung von Polyphosphorsäure gekoppelt ist.

Bekanntlich ist die Verbrennungswärme von elementarem Phosphor außerordentlich hoch. Damit an den Wänden der kombinierten Brenn-/Kondensationskammer eine Abscheidung von hexagonalem Phosphorpentoxid überhaupt erreicht werden kann, muß aufgrund der um die Phosphorverbrennungsdüse herum herrschenden hohen Temperaturen, die Kammer sehr groß dimensioniert sein und die Verbrennung des Phosphors mit einem großen Luftüberschuß (20 bis 50 Gewichts%) erfolgen.

Dies hat zur Folge, daß dabei zwangsläufig große Abgasmengen mit einer relativ hohen Temperatur (380 bis 410°C) anfallen, was aufwendige Absorptionsvorrichtungen notwendig macht, da in der Brenn-/Kondensationskammer nur etwa 43% des entstandenen Phosphorpentoxides abgeschieden und der Rest aus dieser Kammer ausgetragen wird.

Insbesondere dann, wenn die Herstellung von Phosphorpentoxid nicht unmittelbar mit der Gewinnung von Ortho- oder Polyphosphorsäure gekoppelt ist, stellt dies sowohl verfahrenstechnisch als auch wirtschaftlich einen großen Nachteil dar.

Die zur Durchführung der bekannten Arbeitsweisen verwendeten Vorrichtungen haben außerdem den Nachteil gemeinsam, daß eine direkte Wärmeübertragung durch Strahlung von der sehr heißen Phosphorflamme auf bereits abgeschiedenes Material nicht verhindert werden kann. Dies führt in kurzer Zeit zu einer zumindest teilweisen Umwandlung des kristallinen $P_2O_5$ in glasige Produkte.

Überraschenderweise wurde nun gefunden, daß sich diese Nachteile überwinden lassen, wenn man zur Herstellung von hexagonalem Phosphorpentoxid eine Vorrichtung einsetzt, die aus einer kühlbaren Verbrennungskammer 1 besteht, die mit einer Zweistoffverbrennungsdüse 2 für elementaren Phosphor bestückt ist und der eine über ein Absperrorgan 7 mit einem Auffangbehälter 8 für Phosphorpentoxid verbundene Kondensationskammer 4 nachgeschaltet ist, die einen Abgasstutzen 9 trägt. Diese vorsugsweise horizontal angeordnete Verbrennungskammer 1 ist an ihrer Innenwand mit Kühlrohren 10 versehen und über einen Gaskühler 3 mit der Kondensationskammer 4 verbunden, wobei der Gaskühler 3 aus einem Kühlrohrsystem 5 besteht, das in der Art eines offenen Tauchrohres oberhalb des Bodens der Kondensationskammer 4 endet, deren Durchmesser ein Mehrfaches des Durchmessers des Gaskühlers 3 beträgt, und deren Wände mit einer Kühlvorrichtung 6 versehen sind. Die Kühlrohre 10 in der Verbrennungskammer 1 und das Kühlrohrsystem 5 des Gaskühlers 3 bestehen vorteilhafterweise aus spiralformig gewundenen Rohrbündeln, die zweckmäßigerweise aus Edelstahl gefertigt sind.

Durch die erfindungsgemäße Vorrichtung ergeben sich eine Reihe von Vorteilen:
1) das erhaltene Produkt besteht aus der hexagonalen Form des $P_4O_{10}$ und enthält keine polymeren Anteile;
2) die Ausbeute beträgt mehr als 90%;
3) die Dimensionen der Anlage können relativ klein gehalten werden.

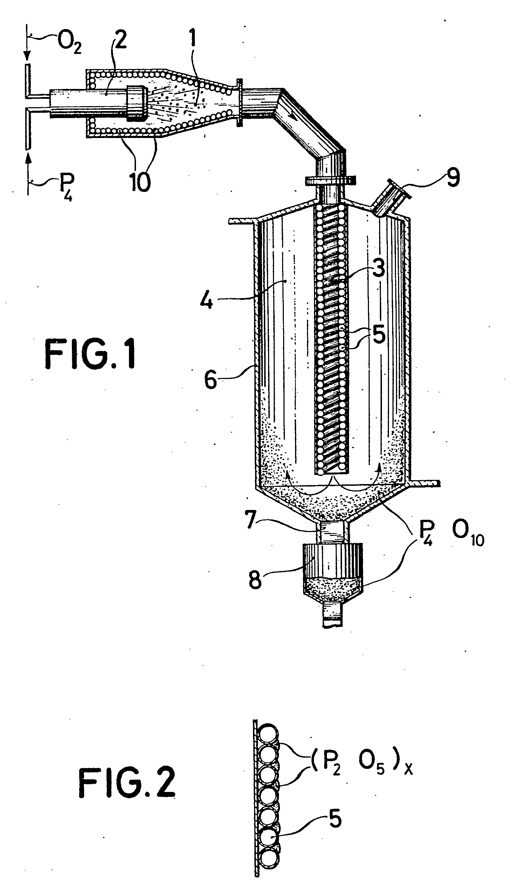

Eine bevorzugte Ausgestaltung der erfindungsgemäßen Vorrichtung ist in der nachfolgenden Figur 1 schematisch dargestellt.

Figur 2 zeigt einen vergrößerten Ausschnitt, der die Abscheidung des polymeren Phosphorpentoxids in den von den Rohren 5 gebildeten Zwickeln darstellt.

Die Verbrennungskammer 1, in der gelber Phosphor in einer Zweistoffdüse 2 mit einem $O_2$-haltigen Gas verbrannt wird, besteht aus mehreren Abschnitten wassergekühlter Edelstahlrohre 10 mit einem äußeren Schutzmantel. Die Verwendung einer aus Rohrbündeln 10 bestehenden Verbrennungskammer 1 hat den Vorteil, daß in allen Abschnitten dieser Kammer durch die Zwangsführung des Kühlwassers eine intensive Kühlung gewährleistet ist An der Innenwand der Rohrbündel 10 wird in den Zwickeln, welche die Rohre miteinander bilden, infolge der Kühlung glasartiges polymeres Phosphorpentoxid $(P_2O_5)_x$ abgeschieden. Dies ist hier erwünscht, weil durch diese Schicht die darunterliegenden Kühlrohre geschützt werden. Die Außenwandtemperatur der gekühlten Rohre läßt sich so unter 100°C halten; hingegen beträgt die Oberflächentemperatur der Schutzschicht aus $(P_2O_5)_x$ etwa 650°C. Die Temperaturen vor der Phosphordüse reichen bis zu 2000°C. Diese hohen Temperaturen gewährleisten eine vollständige Oxidation des $P_4$ zu $P_4O_{10}$ und brauchen nicht durch Verwendung eines großen Luft- bzw. Sauerstoffüberschusses herabgesetzt zu werden. Vielmehr kann die Menge des $O_2$-haltigen Gases — berechnet als $O_2$ und bezogen auf den Phosphor — bis nahe an die stöchiometrischen Verhältnisse, vorzugsweise bis auf einen geringen Überschuß von etwa 2%, gesenkt werden.

Dies ist wichtig für die spätere Abscheidung des $P_4O_{10}$ aus dem Gasstrom, weil die Abscheidung umso besser ist, je weniger Abgas die Kondensationskammer 4 wieder verlassen muß.

Die Abgasmenge kann weiter verringert, der Abscheidegrad entsprechend verbessert werden, wenn die gewöhnlich zur Verbrennung verwendete trockene Luft mit reinem Sauerstoff auf ca. 40 Volumen% $O_2$ angereichert wird.

Das gasförmige $P_4O_{10}$ verläßt die Verbrennungskammer mit einer Temperatur von 800 bis 900°C.

In der Kühlvorrichtung 3 durchströmt dieses heiße Gas die vertikal als "Tauchrohr" angeordnete spiralförmige gedrehten und wassergekühlten Rohrbündel 5 aus Edelstahl.

Hier spielt sich folgender Vorgang ab:

An der gekühlten Rohrfläche scheidet sich weiteres polymeres Phosphorpentoxid ab. Das 800 bis 900°C heiße Gas aus der Verbrennungskammer 1 erhitzt diese Schicht bis auf ca. 650°C. Bei dieser Temperatur beginnt das $(P_2O_5)_x$ wieder zu verdampfen. Die hier an der Wand des ersten Kühlabschnittes befindliche Schicht steht im Verdampfungsgleichgewicht mit dem vorbeistreichenden heißen Gas aus der Brennkammer, d.h. die Schicht erreicht nur eine bestimmte Stärke. Dem Temperaturverlauf folgend ist sie im oberen Teil der Kühlvorrichtung 3 an der Verbindung zur Verbrennungskammer 1, nur schwach, nach unten hin mit fallender Temperatur stärker ausgebildet.

In dieser Kühlvorrichtung 3 erfolgt die Abkühlung des $P_4O_{10}$-haltigen Gases aus der Verbrennungskammer 1 auf eine Temperatur von 650 bis 400°C. Es ist dann soweit abgekühlt worden, daß es beim Eintritt in die Kondensationskammer 4 schlagartig auf <300°C abgekühlt werden kann. Durch diese Vorkühlung, bei der man die Abscheidung des polymeren Phosphorpentoxides zur Ausbildung des oben beschriebenen Gleichgewichtszustandes gezielt in Kauf nimmt, wird erreicht, daß es in der nachfolgenden Kondensationskammer 4 nicht zu Übergangszuständen mit Kondensationen von anderen Phosphorpentoxidmodifikationen kommt, sondern daß sich das $P_4O_{10}$ hier nur in der gewünschten hexagonalen Modifikation niederschlägt.

An diesen gekühlten Flächen der Kondensationskammer 4, die einer Wandtemperatur von 100°C haben, schlägt sich dann das hexagonale Produkt nieder. Es sammelt sich im unteren Teil der Kondensationskammer 4 an und wird über eine Schleuse 7 in einen Auffangbehälter 8 ausgetragen. Bezogen auf den eingesetzten Phosphor beträgt die Ausbeute an hexagonalem $P_4O_{10}$ mehr als 90% Durch Verwendung eines Verbrennungsgases, das mit Sauerstoff bis ca. 40 Volumen% $O_2$ angereichert ist, läßt sich der Abscheidegrad auf mehr als 94% steigern. Das Abgas, das aus der Kondensationskammer 4 durch den Stutzen 9 austritt, besitzt eine Temperatur von 100 bis 120°C. Die relativ geringen Abgasmengen, die nur noch einen minimalen Gehalt an $P_4O_{10}$ aufweisen, lassen sich dann ohne großen Aufwand, falls erforderlich, durch Waschen mit Wasser, Phosphorsäure oder dergleichen reinigen, bevor sie in die Atmosphäre geleitet werden.

Der Vorteil der erfindungsgemäßen Vorrichtung besteht also im wesentlichen darin, daß sie die direkte Wärmestrahlung der Phosphorflamme auf abgeschiedenes $P_2O_5$ verhindert und außerdem eine gezielte Abkühlung des Reaktionsproduktes ermöglicht, wobei in der ersten Abkühlungsphase in einem relativ kleinen Raum eine relativ große Temperaturdifferenz und in der zweiten Phase in einem relative großen Raum eine relativ geringe Temperaturdifferenz erzielt wird.

### Beispiel

Pro Stunde werden 100 l (170 kg) elementarer, flüssiger, gelber Phosphor von ca. 75°C in einer Brennkammer 1, deren gekühlte Wände aus Edelstahlrohrbündeln 10 bestehen, mit trockener Luft von 5,0 bar verbrannt. Die $O_2$-Bestimmung im Abgas ergibt einen Wert von 2,0% $O_2$. Das $P_4O_{10}$-haltige Gas wird mit einer Temperatur von 900°C in die Gaskühlvorrichtung 3, die ebenfalls aus wassergekühlten Bündeln von Edelstahlrohren 5 besteht, geleitet. An deren Wänden setzt sich polymeres Phosphorpentoxid ab. Dadurch wird der Anfang der Kühlvorrichtung 3 soweit isoliert, daß die Temperatur des glasartigen Belages auf deren Wand auf ca. 650°C steigt. Zum Ende des Kühlrohres nimmt die Temperatur des Belages bis auf 400°C ab.

Das $P_4O_{10}$-haltige Gas strömt in die gekühlte Kondensationskammer 4, welche die Kühlvorrichtung 3 weiträumig umschließt, was eine weitere schlagartige Abkühlung des Gases zur Folge hat. An den gekühlten Wänden der Kondensationskammer 4 setzt sich hexagonales lockeres $P_4O_{10}$ ab. Mit Hilfe pneumatischer Klopfvorrichtungen wird das Produkt von den Wänden abgeklopft. Es sammelt sich im unteren Teil der Kondensationskammer 4. Stündlich werden hier 355 kg Phosphorpentoxid ausgetragen. Das Produkt ist frei von Suboxiden, reagiert spontan mit Wasser und ist frei von glasartigen Verunreinigungen der polymeren Form des $P_2O_5$.

Die Ausbeute, bezogen auf den eingesetzten elementaren Phosphor, beträgt 91%.

## Patentansprüche

1. Vorrichtung zur Herstellung von Phosphorpentoxid, bestehend aus einer kühlbaren Verbrennungskammer (1), die mit einer Zweistoffverbrennungsdüse (2) für elementaren Phosphor bestückt und der eine über ein Absperrorgan (7) mit einem Auffangbehälter (8) für Phosphorpentoxid verbundene Kondensationskammer (4) nachgeschaltet ist, die einen Abgasstutzen (9) trägt, dadurch gekennzeichnet, daß zur Herstellung von hexagonalem Phosphorpentoxid die Verbrennungskammer (1) an ihrer Innenwand mit Kühlrohren (10) versehen ist, und daß die Verbrennungskammer (1) über einen Gaskühler (3) mit der Kondensationskammer (4) in Verbindung steht, wobei der Gaskühler (3) aus einem Kühlrohrsystem (5) besteht, das in der Art eines offenen Tauchrohres oberhalb des Bodens der Kondensationskammer (4) endet, deren Durchmesser ein Mehrfaches des Durchmessers des Gaskühlers (3) beträgt, und deren Wände mit einer Kühlvorrichtung (6) versehen sind.

2. Vorrichtung nach Anspruch 1, dadurch gekennzeichnet, daß die Verbrennungskammer (1) horizontal angeordnet ist.

3. Vorrichtung nach Anspruch 1 oder 2, dadurch gekennzeichnet, daß die Kühlrohre (10) in der Verbrennungskammer (1) und das Kühlrohrsystem (5) des Gaskühlers (3) aus spiralförmig gewundenen Rohrbündeln besteht.

4. Vorrichtung nach Anspruch 3, dadurch gekennzeichnet, daß die Rohrbündel aus Edelstahl gefertigt sind.

## Revendications

1. Appareillage destiné à la préparation d'anhydride phosphorique et constitué par une chambre (1) de combustion refroidissable munie d'une buse (2) de combustion du phosphore élémentaire assurant la projection de deux substances et par une chambre (4) de condensation placée à la suite, cette dernière étant munie d'une tubulure (9) d'évacuation de gaz et reliée par l'intermédiaire d'un élément d'arrêt (7) à un récipient (8) destiné à recevoir l'anhydride phosphorique, caractérisé en ce que, pour la préparation d'anhydride phosphorique hexagonal, la chambre (1) de combustion porte sur sa paroi interne des tubes (10) de refroidissement et est reliée par l'intermédiaire d'un réfrigérant (3) de gaz à la chambre (4) de condensation, le réfrigérant (3) de gaz étant constitué par un système (5) de tubes de refroidissement qui se termine, à la façon d'un tube plongeur ouvert, au-dessus du fond de la chambre (4) de condensation, dont le diamètre est un multiple de celui du réfrigérant (3) de gaz et dont les parois sont pourvues d'un dispositif (6) de refroidissement.

2. Appareillage selon la revendication 1, caractérisé en ce que la chambre (1) de combustion se trouve en position horizontale.

3. Appareillage selon la revendication 1 ou 2, caractérisé en ce que les tubes (10) de refroidissement dans la chambre (1) de combustion et le système (5) de tubes de refroidissement formant partie du réfrigérant (3) de gaz consistent en faisceaux de tubes.

4. Appareillage selon la revendication 3, caractérisé en ce que les faisceaux de tubes sont fabriqués en acier inoxydable.

## Claims

1. Apparatus for making phosphorus pentoxide, the apparatus comprising a coolable combustion chamber (1) which is provided with a two component combustion nozzle (2) for elementary phosphorus and has a condensation chamber (4) for phosphorus pentoxide series connected thereto, the latter being provided with an off-gas outlet (9) and communicating through a locking means (7) with a receiver (8) for phosphorus pentoxide, wherein, in order to obtain hexagonal phosphorus pentoxide, the combustion chamber (1) has a plurality of cooling pipes (10) disposed at its inside wall and is connected through a gas cooler (3) to the condensation chamber (4), the gas cooler (3) comprising a system of cooling pipes (5) and terminating, similarly to an open immersion tube, above the bottom portion of the condensation chamber (4), of which the diameter is a multiple of the diameter of the gas cooler (3) and of which the walls are provided with a cooling device (6).

2. The apparatus as claimed in claim 1, wherein the combustion chamber (1) is arranged in horizontal position.

3. The apparatus as claimed in claim 1 or 2, wherein the cooling pipes (10) disposed in the combustion chamber (1) and the system of cooling pipes (5) constituting the gas cooler (3) comprise helically wound bundled pipes.

4. The apparatus as claimed in claim 3, wherein the bundled pipes are stainless steel pipes.

0 000 698

FIG.1

$O_2$

2

1

10

$P_4$

3

4

5

6

9

7

$P_4$ $O_{10}$

8

FIG.2

$(P_2\ O_5)_x$

5

1